# EUROPEAN PATENT SPECIFICATION

(11) **EP 1 761 134 B1**
(45) Date of publication and mention of the grant of the patent: **03.09.2008**
(21) Application number: 05754603.8
(22) Date of filing: 17.06.2005
(51) Int. Cl.: A23L 1/00, A22C 13/00, A23C 19/16

(54) **DRY FORMULATIONS SUITABLE FOR THE SURFACE PRESERVING TREATMENT OF ALIMENTS OR AS A GLUE FOR TAGS ON ALIMENTS**
TROCKENFORMULIERUNGEN, DIE SICH FÜR DIE OBERFLÄCHENKONSERVIERUNGSBEHANDLUNG VON NAHRUNGSMITTELN ODER ALS KLEBSTOFF FÜR ETIKETTEN AUF NAHRUNGSMITTELN EIGNEN
FORMULATIONS SECHES DESTINEES AU TRAITEMENT DE CONSERVATION SUPERFICIEL D'ALIMENTS OU UTILISEES EN TANT QUE COLLE POUR DES ETIQUETTES SUR DES ALIMENTS

(30) Priority: 21.06.2004 IT MI20041235
(43) Date of publication of application: 14.03.2007
(73) Proprietor: CIP S.R.L., I-26100 Cremona (IT)
(72) Inventor: GOBBI, Piergiorgio, I-26100 Cremona (IT); FERRARI, Barbara, I-26020 Acquanegra Cremonese (IT)
(74) Representative: Zanoli, Enrico
(86) International application number: PCT/IB2005/001956
(87) International publication number: WO 2006/000905

(56) References cited:
- EP-A- 1 537 785
- WO-A-01/82708
- WO-A-03/101214
- DE-A1- 10 112 431

## Description

The present invention relates to the use of a formulation in powder form which can be dispersed in water and used in an aqueous dispersion for surface treatment of aliments or foodstuffs, particularly cheeses, sausages, salami and cold meat, capable of forming on the surface of the foodstuff a protective film which is insoluble in water.

The invention also relates to a formulation in powder form having the properties described above and comprising one or more antimycotic active ingredients.

### BACKGROUND ART

Currently, aqueous emulsions of polymers or copolymers such as polyvinyl acetate, copolymers of ethylene with acrylic acid, polyvinyl alcohol, are used to protect foodstuffs such as cheeses, sausages, salami and cold meat, and are capable of forming a protective film which is insoluble in water on the surface of the foodstuff. The above cited film-forming polymers and copolymers are commercially available in the form of aqueous emulsions but not as dry formulations which can be dispersed in water to be used at the time of use and capable of forming on the surface of the foodstuff protective films which are insoluble in water.

Formulations in powder form which can be dispersed in water are known, but they are unable to provide on the foodstuff films that are insoluble in water, comprising an antimycotic active ingredient and substances which have a predominant function of suspending active ingredients.

Formulations in powder form which can be dispersed in water and are capable of forming on the surface of foodstuffs a film that is insoluble in water are not known.

### SUMMARY OF THE INVENTION

It has been found surprisingly that formulations in powder form which can be dispersed in water and comprise film-forming copolymers of vinyl acetate with ethylene containing 60-80% by weight of vinyl acetate or copolymers, in which part of the monomer units derived from ethylene are substituted by units derived from alkyl acrylates or from mixtures of alkyl acrylates with alkyl versatates, can be used for surface preservation treatment of foodstuffs such as cheeses, sausages, salami and cold meat, since the dispersions in water of the formulations, used for the treatment, form on the surface of the foodstuffs films which are insoluble in water and compatible with foods, have good adhesion and high flexibility, and in which the antimycotic active ingredients, when used, are dispersed uniformly.

The alkyl acrylates and versatates used to prepare the copolymers preferably contain alkyl groups with 1-4 carbon atoms; the butyl group is preferred.

In copolymers which contain units from ethylene and acrylate and from ethylene, acrylate, versatate, their percentage by weight is preferably the same.

In the formulations, the copolymers constitute 70-90% by weight and the remainder consists of solid material in powder form, which is compatible with foodstuffs, such as magnesium and titanium oxides, kaolin, carbonates and the like. Preferably, protective colloids such as polyvinyl alcohol are present. The powders have a particle size distribution such that particles with dimensions larger than 300-400 microns are in practice absent.

The copolymers are prepared according to known methods by copolymerization of the monomers in an aqueous phase and under pressure. The powders are obtained by drying aqueous phases by way of dry-spraying.

Formulations in powder form which are within the scope of the formulation described above are commercially available under the trademark Mowilith Polvere DM 117 P and Mowilith Polvere LDM 1190 P of Celanese Emulsions GmbH (Frankfurt am Main, Germany).

On the basis of the applications suggested in the brochure, the formulations are used exclusively to prepare grouts, decorative plasters, adhesives and similar applications.

The Mowilith DM 117 P powder comprises a film-forming ethylene-vinyl acetate copolymer and the Mowilith 1190P powder comprises a film-forming vinyl-acrylate-versatate-ethylene acetate copolymer.

The powders have an apparent specific weight of 450±100 g/l; their particle size distribution does not comprise particles with dimensions above 315 microns. The ash content at 930 °C for 30 minutes (DIN EN 1246) is of 10-12% by weight.

Moreover, it has been found, and this is another aspect of the present invention, that the formulations that do not contain antimycotic and/or antibacterial active ingredients can be used as glue for labels for foodstuffs.

When the formulation comprises antimycotic active ingredients, preferably natamicin, azoxystrobin and their derivatives, they are present in quantities of 0.01-10 g/kg, preferably 0.1-5 g/kg.

The formulation can comprise antibacterial products selected for example among sodium chloride, potassium chloride, benzoic acid and salts thereof, parahydroxybenzoates or antimycotic acids such as propionic acid, sorbic acid, and salts thereof, suspending and thickening agents such as carboxymethylcellulose, polyvinylpyrrolidone and gums such as xanthan and gellan. The dry formulation may further comprise buffering products, pH-stabilizing products such as sodium salts of acetic acid, lactic acid. The dry formulation can be used instantly with the addition of water or other compatible liquid by simple agitation.

The resulting emulsion or suspension is applied to the surface of the foodstuffs according to known methods, for example by immersion or spraying or spreading.

The dry formulation according to the present invention allows to obtain, in addition to a lower transport cost (the liquid fraction, which can affect by even more than 50% the total weight, is not transported), the possibility to prepare at the time of use the emulsion or suspension in water to be used for the preservation treatment, thus eliminating the danger that arises from freezing during transport or during stops in cold countries. Freezing can irreparably compromise the emulsions or suspensions with productions of films which are not soluble in water and retention of the activity of the antimycotic active principles, which in the dry state remains unchanged for long periods and instead undergoes gradual and constant deterioration once it is in an aqueous suspension or emulsion. Excessive heat also can compromise the stability of the emulsions and suspensions in addition to the effectiveness of the active ingredients contained therein.

The following examples are given by way of non-limiting illustration of the invention.

The examples relate to tests on the surfaces of cheeses, sausages, salami and cold meat, by using the copolymers according to the invention in a dry formulation, the powder of which was dispersed in water.

The tests were performed in parallel with the currently marketed aqueous emulsions of an ethylene-vinyl acetate copolymer. Good adhesiveness of the film to the rind of cheese, uniform distribution of the added active ingredients, perfect drying and film-forming were observed. The mold-resistant result obtained with the dry formulation according to the invention was similar to the one obtained by using the currently commercially available aqueous emulsion.

### Example 1

Fresh "provoletta" cheeses weighing approximately 1 kg, freshly removed from brine, were immersed in baths prepared by diluting in water Mowilith Powder DM 117 P(concentration 500 g/l) and natamicin in different concentrations: 0.1 % (MIC1), 0.2% (MIC2), 0.25% (MIC3). One "provoletta" cheese was immersed in each bath. The "provoletta" cheeses, hung by their tying string, were placed to dry in the maturing room under controlled humidity and temperature (relative humidity comprised between 80 and 85% and temperature comprised between 10 and 15 °C) and checked for the presence of molds at intervals of 30 days over the three months provided for the maturing of this type of cheese. The results are given in Table 1.

**Table 1 - development of molds on the surface of cheeses.**

| Type of treatment | 30 days | 60 days | 90 days |
|---|---|---|---|
| MIC 1 | No visible molds | Slight presence of molds | Presence of molds |
| MIC 2 | No visible molds | No visible molds | Slight presence of molds |
| MIC 3 | No visible molds | No visible molds | No visible molds |

### Example 2

Three "provoletta" cheeses were subjected to the same experimental conditions and to the same percentages and natamicin, according to example 1, but by using a commercially available aqueous emulsion of an ethylene-vinyl acetate copolymer (ECAV 1, 2, 3) with a dry residue of 50%. The results are given in Table 2.

**Table 2 - generation of molds on the surface of cheeses**

| Type of treatment | 30 days | 60 days | 90 days |
|---|---|---|---|
| ECAV 1 | No visible molds | Slight presence of molds | Presence of molds |
| ECAV 2 | No visible molds | No visible molds | Presence of molds |
| ECAV 3 | No visible molds | No visible molds | No visible molds |

### Example 3

Fresh "provoletta" cheeses weighing approximately 1 kg. freshly taken out of brine, were immersed in three different baths prepared with Mowilith Powder DM 117 P copolymer diluted in water at a concentration of 500 g/l with the addition of 0.2% natamicin and of 2% by weight of calcium sorbate (G) and, for comparison, three "provoletta" cheeses were immersed in an aqueous emulsion of ethylene-vinyl acetate copolymer according to Example 2, with the addition of the same percentages of active ingredients (H).

The "provoletta" cheeses, hung by their tying string, were placed to dry in the maturing room, under controlled humidity and temperature (relative humidity comprised between 80 and 85% and temperature comprised between 10 and 15 °C) and the presence of molds was checked at 30-day intervals over the planned three months. The results are given in Table 3.

**Table 3 - Development of molds on the surface of cheeses**

| Type of treatment | 30 days | 60 days | 90 days |
|---|---|---|---|
| G | No visible molds | No visible molds | No visible molds |
| H | No visible molds | No visible molds | No visible molds |

### Example 4

Fresh "provoletta" cheeses weighing approximately 10 kg, freshly removed from brine, were immersed in baths prepared by diluting in water Mowilith Powder DM 117 P (concentration 300 g/l), polyvinylpyrrolidone (concentration 8 g/l), carboxymethylcellulose (concentration 5 g/l), natamicin in various concentrations: 0% (control with the copolymer alone, FO₀), 0.1% (FO₁) and 0.25% (FO₂). One "provola" cheese was immersed in each bath. The "provola" cheeses, hung by their tying string, were placed to dry in the maturing room under controlled humidity and temperature (relative humidity comprised between 80% and 85% and temperature comprised between 10 and 15 °C), and the presence of molds was checked at intervals of 30 days over the three months provided for the maturing of this type of cheese. The results are given in Table 4.

**Table 4 - Development of molds on the surface of cheeses**

| Type of treatment | 30 days | 60 days | 90 days |
|---|---|---|---|
| FO₀ | No visible molds | Slight presence of molds | Presence of molds |
| FO₁ | No visible molds | No visible molds | No visible molds |
| FO₂ | No visible molds | No visible molds | No visible molds |

In Example 4, by replacing the Mowilith Powder DM 117 P copolymer with the aqueous emulsion of commercially available ethylene-vinyl acetate copolymer with a dry residue of 30% and by leaving the rest of the formulations unchanged, the results overlap the ones given in Table 4.

### Example 5

Fresh sausages of the Napoli type, directly after stuffing, were immersed in baths prepared with Mowilith Powder DM 117 P (concentration 200 g/l) and xanthan gum (concentration 0.025%) and active ingredients thus distributed: natamicin (concentration 0.125%), calcium sorbate (concentration 5%), association of 0.125% natamicin + 5% calcium sorbate. One sausage was immersed in each bath. The sausages were hung to dry in the seasoning room under controlled temperature and humidity and checked daily for the presence of molds for a period of 15 days, sufficient for the seasoning of this type of product. For the sake of comparison, a sausage without any surface treatment (control) was placed in the same experimental conditions. The results are given in Table 5.

**Table 5 - development of molds on the surface of sausages**

| Type of treatment | Day of mold appearance | Molds after 15 days |
|---|---|---|
| Control | 3^{rd} | 4+ |
| Nat. 0.125% | 5^{th} | 2+ |
| Ca Sorb. 5% | 6^{th} | 1+ |
| Nat. 0.125% + Ca Sorb. 5% | | 0/1+ |

In Example 5, by replacing the Mowilith Powder DM 117 P copolymer with an aqueous emulsion of ethylene-vinyl acetate copolymer with a dry residue of 20% and leaving the rest of the formulations unchanged, the results could overlap the results described in Table 5.

It is noted that in all the formulations given in the examples cited above, by replacing the Mowilith Polvere DM 117 P copolymer with Mowilith Powder LDM 1190 P the results given in the various tables overlap.

The dry formulations (powder) of the copolymers cited above fall within the scope of the legal provisions for food packaging.

The disclosures in Italian Patent Application no. MI2004A001235, from which this application claims priority, are incorporated herein by reference.

## Claims

1. Use of dry water-dispersible formulations in powder form comprising a film-forming vinyl acetate-ethylene copolymer or a vinyl acetate-ethylene copolymer in which part of the monomer units derived from ethylene are substituted by units derived from alkyl acrylates or from mixtures of alkyl versatates and acrylates for the preparation of aqueous dispersions for the surface preserving treatment of foodstuffs on the surface of which the copolymers form a protective film which is insoluble in water and compatible with foodstuffs.

2. The use according to claim 1, wherein the copolymers of the formulation in powder form contain 60-80% by weight of units derived from vinyl acetate, and the units derived from ethylene, alkyl versatates and acrylates are present in equal percentages by weight.

3. The use according to claims 1 and 2, wherein the formulation in powder form comprises polyvinyl alcohol as a protective colloid and/or suspension agents selected among carboxymethylcellulose, polyvinylpyrrolidone, xanthan and gellan gums, and/or buffering products selected among sodium salts of acetic acid and lactic acid.

4. The use according to claims 1 and 3, wherein the copolymers are present in the formulation in powder form in quantities between 70 and 80% by weight.

5. The use according to claims 1 to 4, wherein the foodstuff is selected among cheeses, sausages, salami and cold meat.

6. The use according to claims 1 to 5, wherein the formulation in powder form is present in the aqueous dispersion in a percentage between 3 and 90% by weight.

7. Use of aqueous dispersions of formulations in powder form comprising a copolymer as defined in claims 1 to 4 as glue for tags for foodstuffs, particularly cheeses, sausages, salami and cold meat.

8. Use of dry Water-dispersible formulations in powder form as defined in claims 1 to 4, comprising at least one antimycotic active ingredient.

9. The formulations according to claim 8, wherein the active ingredient is selected among natamicin and azoxystrobin and derivatives thereof.

10. The formulations according to claims 8 to 9, comprising antibacterial agents selected among potassium and sodium chloride, benzoic acid and salts thereof, p-hydroxybenzoates, lactic acid, and/or polyene antibiotic agents.

11. Foodstuffs, particularly cheeses, sausages, salami and cold meat, on the surface of which a water-insoluble film is applied which is obtained from aqueous dispersions of the formulation in powder form according to claims 1 to 4 or from aqueous dispersions of the formulations according to claims 8 to 10.

## Patentansprüche

1. Verwendung von trockenen wasserdispergierbaren Formulierungen in Pulverform, umfassend ein schichtbildendes Vinylacetat-Ethylencopolymer oder ein Vinylacetat-Ethylencopolymer, in dem ein Teil der von Ethylen abgeleiteten Monomereinheiten mit Einheiten substituiert sind, die von Alkylacrylaten oder von Mischungen aus Alkylversataten und -acrylaten abgeleitet sind, zum Herstellen wässriger Dispersionen zur Oberfächen-Konservierungsbehandlung von Nahrungsmitteln auf deren Oberfläche die Copolymere eine Schutzbeschichtung bilden, welche in Wasser unlöslich und mit den Lebensmitteln kompatibel ist.

2. Verwendung nach Anspruch 1, wobei die Copolymere der Formulierung in Pulverform 60-80 Gew.-% an von Vinylacetat abgeleiteten Einheiten enthalten und wobei die von Ethylen, Alkylversataten und -acrylaten abgeleiteten Einheiten in gleichen Gewichtsprozentanteilen vorliegen.

3. Verwendung nach Anspruch 1 und 2, wobei die Formulierung in Pulverform Polyvinylalkohol als Schutzkolloid und/oder Suspensionsmittel, ausgewählt aus Carboxymethylcellulose, Polyvinylpyrrolidon, Xanthan und Gellangummis und/oder Pufferprodukte, ausgewählt aus Natriumsalzen von Essig- und Milchsäure, enthält.

4. Verwendung nach Anspruch 1 und 3, wobei die Copolymere in der Formulierung in Pulverform in Mengen zwischen 70 und 80 Gew.-% vorliegen.

5. Verwendung nach Anspruch 1 bis 4, wobei die Nahrungsmittel ausgewählt sind aus Käse, Würsten, Salami und kaltem Fleisch.

6. Verwendung nach Anspruch 1 bis 5, wobei die Formulierung in Pulverform in der wässrigen Dispersion in einem Prozentanteil zwischen 3 und 90 Gew.-% vorliegt.

7. Verwendung wässriger Dispersionen von Formulierungen in Pulverform, umfassend ein nach den Ansprüchen 1 bis 4 definiertes Copolymer, als Klebstoff für Bezeichnungsschilder für Nahrungsmittel, insbesondere Käse, Würste, Salami und kaltes Fleisch.

8. Verwendung von nach den Ansprüchen 1 bis 4 definierten trockenen wasserdispergierbaren Formulierungen in Pulverform, umfassend wenigstens einen antimykotischen aktiven Bestandteil.

9. Formulierungen nach Anspruch 8, wobei der aktive Bestandteil ausgewählt ist aus Natamicin und Azoxystrobin und Derivaten derselben.

10. Formulierungen nach Anspruch 8 bis 9, umfassend antibakterielle Mittel, ausgewählt aus Kalium- und Natriumchlorid, Benzoesäure und Salzen derselben, p-Hydroxybenzoaten, Milchsäure und/oder antibiotische Mittel aus Polyen.

11. Nahrungsmittel, insbesondere Käse, Würste, Salami und kaltes Fleisch, auf deren Oberfläche eine wässerunlösliche Schicht aufgebracht wird, die aus wässrigen Dispersionen der Formulierungen in Pulverform nach den Ansprüchen 1 bis 4 oder aus wässrigen Dispersionen der Formulierungen nach den Ansprüchen 8 bis 10 erhalten wird.

## Revendications

1. Utilisation de formulations sèches dispersibles dans l'eau sous forme pulvérulente comprenant un copolymère acétate de vinyle-éthylène filmogène ou un copolymère acétate de vinyle-éthylène où une partie des motifs monomères dérivés d'éthylène est substituée par des motifs dérivés d'acrylates d'alkyle ou de mélanges de versatates et d'acrylates d'alkyle pour la préparation de dispersions aqueuses destinées au traitement de conservation superficielle d'aliments sur la surface desquels les copolymères forment un film protecteur qui est insoluble dans l'eau et compatible avec les aliments.

2. Utilisation selon la revendication 1, dans laquelle les copolymères de la formulation sous forme pulvérulente contiennent 60 à 80 % en poids de motifs dérivés d'acétate de vinyle, et les motifs dérivés d'éthylène, de versatates et d'acrylates d'alkyle sont présents en des pourcentages équivalents en poids.

3. Utilisation selon les revendications 1 et 2, dans laquelle la formulation sous forme pulvérulente comprend du poly(alcool vinylique) en tant que colloïde protecteur et/ou des agents stabilisateurs choisis parmi la carboxyméthylcellulose, la poly(vinylpyrrolidone), les gommes xanthique et gellane, et/ou des produits tampons choisis parmi les sels de sodium d'acide acétique et d'acide lactique.

4. Utilisation selon les revendications 1 et 3, dans laquelle les copolymères sont présents dans la formulation sous forme pulvérulente en des quantités comprises entre 70 et 80 % en poids.

5. Utilisation selon les revendications 1 à 4, dans laquelle les aliments sont choisis parmi les fromages, les saucisses, le salami et la viande froide.

6. Utilisation selon les revendications 1 à 5, dans laquelle la formulation sous forme pulvérulente est présente dans la dispersion aqueuse en un pourcentage compris entre 3 et 90 % en poids.

7. Utilisation de dispersions aqueuses de formulations sous forme pulvérulente comprenant un copolymère comme défini dans les revendications 1 à 4 en tant que colle pour des étiquettes pour aliments, en particulier les fromages, les saucisses, le salami et la viande froide.

8. Utilisation de formulations sèches dispersibles dans l'eau sous forme pulvérulente comme défini dans les revendications 1 à 4, comprenant au moins un ingrédient actif antimycotique.

9. Formulations selon la revendication 8, dans lesquelles l'ingrédient actif est choisi parmi la natamicine et l'azoxystrobine et des dérivés de celles-ci.

10. Formulations selon les revendications 8 et 9, comprenant des agents antibactériens choisis parmi le chlorure de potassium et le chlorure de sodium, l'acide benzoïque et les sels de celui-ci, les p-hydroxybenzoates, l'acide lactique et/ou les agents antibiotiques polyéniques.

11. Aliments, en particulier fromages, saucisses, salami et viande froide, sur la surface desquels un film insoluble dans l'eau est appliqué, lequel est obtenu à partir de dispersions aqueuses de la formulation sous forme pulvérulente selon les revendications 1 à 4 ou de dispersions aqueuses des formulations selon les revendications 8 à 10.
